# EUROPÄISCHE PATENTANMELDUNG

(11) **EP 0 741 006 A1**
(43) Veröffentlichungstag der Anmeldung: **06.11.1996**
(21) Anmeldenummer: 96106988.7
(22) Anmeldetag: 03.05.1996
(51) Int. Cl.: B32B 27/08, B32B 7/02, B65D 65/46

(54) **Biologisch abbaubarer Verpackungswerkstoff**

(30) Priorität: 04.05.1995 DE 19516361
(71) Anmelder: Buna Sow Leuna Olefinverbund GmbH, D-06258 Schkopau (DE)
(72) Erfinder: Voigt, Hans-Dieter, Dr., 06130 Halle (DE); Kakuschke, Rolf, Dr., 06126 Halle (DE); Schaffer, Jürgen, Dr., 06122 Halle (DE)

(57) **Zusammenfassung**

1. Biologisch abbaubarer Verpackungswerkstoff für biologisch aktive Lebensmittel wie Joghurt und andere Milchprodukte.
2.1 Der Verpackungswerkstoff hat eine hohe Sperrwirkung gegen Wasserdampf und Luftsauerstoff, ist aromadicht, wird von biologisch aktiven Lebensmitteln während der Haltbarkeitsdauer nicht angegriffen, obwohl er biologisch abbaubar ist und hat ausreichende mechanische Stabilität gegen die Beanspruchungen beim Transport und Lagerung.
2.2 Der Verpackungswerkstoff besteht aus einer thermoplastischen Verbundfolie, deren innere, dem zu verpackenden Lebensmittel zugewandte Schicht eine wesentlich langsamere biologische Abbaurate als die äußere aus Stärkederivaten wie Stärkeestern, modifizierten Stärkeestern oder weichmacherhaltigen Stärkeestern oder Polyhydroxybuttersäure aufweist.
2.3 Der Verpackungswerkstoff wird insbesondere für die Herstellung von Verpackungsbehältern für Joghurt und andere Milchprodukte sowie Hefe verwendet.

## Beschreibung

Die Erfindung betrifft biologisch abbaubare Verpackungswerkstoffe insbesondere für biologisch aktive Substanzen wie Joghurt, Kefir und andere Milcherzeugnisse sowie Hefe.

Verpackungsbehälter für breiige und flüssige Lebensmittel insbesondere für Milchprodukte bestehen im allgemeinen aus thermoplastischen Kunststoffen wie Polyethylen, Polypropylen, Polystyren, Polyvinylchlorid und/oder aus entsprechenden Copolymeren. Die Behälter sind gewöhnlich als Becher, Flaschen oder Beutel geformt. In diesen Behältern werden die verpackten Lebensmittel vor einer Wechselwirkung mit der Umwelt vortrefflich geschützt, indem insbesondere der Zutritt von Mikroben, die die Lebensmittel verderben können, stark eingeschränkt oder verhindert wird. Außerdem ist diese Art von Behältern ausreichend stabil, damit sie beim Transport und bei der Lagerung durch mechanische Einwirkung nicht beschädigt oder zerstört werden. Verpackungsmaterial aus den genannten Kunststoffen ist jedoch nicht verrottbar, somit ergeben sich bei der Entsorgung Probleme insbesondere auf Deponien. Um diese zu lösen, wurde schon mehrfach vorgeschlagen, biologisch abbaubare Werkstoffe für Lebensmittelverpackungen zu verwenden.

So wird nach DE-OS 42 44 000 vorgeschlagen, Verpackungswerkstoffe aus einer sauerstoffsperrenden Kernschicht aus Polyvinylalkohol und beiderseits der Kernschicht aus wasserdampfsperrenden Schichten aus Polyhydroxybutyrat, Polyhydroxyvaleriat oder einem Copolymer hiervon aufzubauen. Auf jeder der beiden wasserdampfsperrenden Schichten ist noch eine Schicht aus einem Cellulosederivat und/oder aus Papier angeordnet. Nach DE-OS 41 37 658 können Verpackungsmaterialien aus mehrlagigen Verbundstoffen bestehen. Die Verbundstoffe sind aus Papier, Karton und einem Biokunststoff, der aus Stärke oder einem ähnlichen Naturrohstoff gewonnen werden kann, ausgewählt.

Die dem Lebensmittel zugewandte Seite des Verpackungsmaterials besteht aus lebensmittelrechtlich zulässigem Papier.

Den genannten Lösungen haftet der Nachteil an, daß biologisch aktive Lebensmitel wie Joghurt, Kefir und andere Milcherzeugnisse sowie Hefe, die mit ihnen in Berührung kommenden Verpackungen angreifen können, wenn die dem Lebensmittel zugewandte Seite der Verpackung aus biologisch abbaubaren Materialien besteht. Dadurch können die Behälterwände durch Strukturveränderungen in ihrer Festigkeit beeinträchtigt werden. Abbauprodukte des Behältermaterials können in die Lebensmittel übertreten und toxische Probleme sowie Geschmacksund Aussehensbeeinträchtigungen verursachen.
Es ist nun Aufgabe der Erfindung, Verpackungswerkstoffe zur Verfügung zu stellen, die eine hohe Sperrwirkung gegenüber Wasserdampf und Luftsauerstoff aufweisen, aromadicht sind, ausreichende mechanische Stabilität für Transport und Lagerung der Lebensmittel aufweisen und nach der Haltbarkeitsdauer der Lebensmittel biologisch abbaubar sind.
Erfindungsgemäß wird die Aufgabe dadurch gelöst, daß der mehrschichtig aufgebaute biologisch abbaubare Verpackungswerkstoff aus einer inneren, dem Lebensmittel zugewandten Schicht aus einem biologisch langsam abbauenden Produkt und die äußere Schicht aus einem schneller abbauenden Produkt besteht. Das biologisch langsamer abbauende Material kann insbesondere ein aliphatisches Polyalkylencarbonat sein.
Die äußere Schicht kann aus Stärkederivaten, insbesondere Stärkeestern, modifizierten Stärkeestern oder weichmacherhaltigen Stärkeestern bestehen. Weiterhin sind als Material für die äußere Schicht Polyhydroxybuttersäure oder modifizierte Polyhydroxybuttersäure geeignet.

Um genügende Festigkeit zu erzielen, besitzt die innere Schicht bzw. Folie eine Dicke von 10 bis 60 µm und die außere Schicht eine Dicke von 100 bis 400 µm und kann auch als Schaumfolie ausgebildet sein. Überraschend wurde gefunden, daß ein Werkstoff, wie er vorstehend beschrieben ist, hervorragende Eigenschaften besitzt. Unter Umgebungsbedingungen ist er für Aromastoffe wasserdampf- und sauerstoffdicht und wird von den darin aufbewahrten flüssigen oder breiartig feuchten Lebensmitteln insbesondere von biologisch aktiven Lebensmitteln nicht angegriffen. Das Material ist während des Gebrauches beständig und wird dennoch in einem vernünftigen Zeitraum biologisch abgebaut. Durch die Wahl des Verhältnisses der Dicke des Schichtaufbaus zerfällt zuerst die dickere Schicht des schnell abbauenden Materials, so daß die Behälter nur noch aus einer sehr dünnen Schicht des langsamer abbauenden Materials bestehen. Bedingt durch die geringe Schichtdicke des verbleibenden langsamer abbauenden Materials geht die Morphologie des Behälters verloren.
Das für die innere Schicht verwendete besonders geeignete Polypropylencarbonat ist amorph, glasklar und beständig gegen Alkohol, Wasser, Säuren, Glykole, Fette und Öle. Das Polymer läßt sich im Temperaturbereich von 110 bis 175 °C thermoplastisch insbesondere zu Folien verarbeiten, die ein hohes Maß an Flexibilität besitzen.

Als Stärkederivate, welche die äußere Schicht bilden, werden bevorzugt Stärkeester, insbesondere Stärkeacetate, eingesetzt, die Substitutionsgrade von 1,8 bis 2,6 besitzen, wobei die zu derivatisierenden Stärken Amylosegehalte von 20 bis 85 Masse% haben. Zur Verbesserung der thermoplastischen Verarbeitbarkeit werden die Stärkeester modifiziert oder mit geeigneten Weichmachern plastifiziert. Die Eigenschaften dieser Stärkederivate erlauben die homogene Einarbeitung von geeigneten Pigmenten, Füllstoffen sowie Stabilisatoren und Gleitmitteln, die für die farbliche Gestaltung und die mechanische Stabilität von Bedeutung sind. Ein derartiger Verbund kann zur Verpackung von Lebensmitteln insbesondere von biologisch aktiven Lebensmitteln verwendet werden, da das Polypropylencarbonat ein Kunststoff ist, der das Lebensmittel nicht nachteilig verändert und gute Sperrwirkung besitzt.

Der äußere, schneller biologisch abbaubare Verbundbestandteil sorgt für die nötige mechanische Stabilität und durch seine sehr gute Einfärbbarkeit für eine attraktive Gestaltung der Verpackung. Nach Gebrauch bietet der erfindungsgemäße Werkstoff keinerlei Schwierigkeiten bei der Entsorgung.
Er kann entweder kompostiert werden oder zerfällt in hinreichend feuchten Deponien.

Zur Herstellung der erfindungsgemäßen Werkstoffe werden die Schichten in Form von Folien miteinander kombiniert. Geeignete Verfahren zur Ausbildung des Verbundes sind Coextrusion, Verbinden der Folien durch Kleben oder Kaschieren von Gießfolien oder Schaumfolien.

In einem Ausführungsbeispiel soll der Gegenstand der Erfindung näher erläutert werden.
Ein Joghurtbecher wird aus einer Verbundfolie durch Tiefziehen hergestellt. Die Tiefziehfolie besteht aus einem Verbund aus einem Polypropylencarbonat mit einem Molekulargewicht von Mw 150 000 und einem Stärkeacetat mit einem Amylosegehalt von 65 Ma.%, einem Substitutionsgrad 15 von 2,3 und einem Weichmachergehalt von 20 Ma%. Die Schichtdicken betragen 25 µm für die innere und 140 µm für die äußere Schicht. Bei der Lagerung von Joghurt in dem Becher unter Luftabschluß über einen Zeitraum von 6 Wochen bei Raumtemperatur ist danach keine Veränderung der inneren Oberfläche festzustellen und keine Beeinträchtigung des Lebensmittels in Aussehen und Geschmack eingetreten.
Bei der Deponierung dieses Behältes unter Rottebedingungen ist nach drei Monaten Lagerzeit die äußere Schicht des Bechers soweit zersetzt, daß die mechanische Stabilität des Materials nicht mehr ausreicht, die ursprüngliche Form des Bechers zu bewahren. Die zurückbleibende innere dünne Folie ist nach weiteren 14 Monaten soweit zerfallen, daß ein Gefüge nicht mehr erkennbar ist.

## Patentansprüche

1. Biologisch abbaubarer Verpackungswerkstoff aus einer mehrschichtigen, thermoplastischen Verbundfolie für die Verpackung biologisch aktiver Produkte, insbesondere Joghurt, Kefir, andere Milchprodukte sowie Hefe, dadurch gekennzeichnet, daß die innere, dem einzufüllenden Produkt zugewandte Schicht der Verbundfolie aus einem Polymer mit geringer biologischer Abbaurate wie beispielsweise aus einem Polyalkylencarbonat und die äußere Schicht der Verbundfolie aus einem Polymer mit höherer biologischer Abbaurate wie beispielsweise aus Stärkederivaten oder Polyhydroxybuttersäure besteht.

2. Biologisch abbaubarer Verpackungswerkstoff nach Anspruch 1, dadurch gekennzeichnet, daß die innere Schicht der Verbundfolie aus Polypropylencarbonat oder Polyethylencarbonat besteht.

3. Biologisch abbaubarer Verpackungswerkstoff nach Anspruch 1, dadurch gekennzeichnet, daß die äußere Schicht der Verbundfolie aus Stärkeestern, modifizierten Stärkeestern oder weichmacherhaltigen Stärkeestern besteht.

4. Biologisch abbaubarer Verpackungswerkstoff nach Anspruch 1 und 3, dadurch gekennzeichnet, daß der Stärkeester Stärkeacetat ist.

5. Biologisch abbaubarer Verpackungswerkstoff nach Anspruch 1, dadurch gekennzeichnet, daß die äußere Schicht der Verbundfolie aus Polyhydroxybuttersäure oder modifizierter Polyhydroxybuttersäure besteht.

6. Biologisch abbaubarer Verpackungswerkstoff nach den Ansprüchen 1 bis 5, dadurch gekennzeichnet, daß die innere Schicht der Verbundfolie eine Dicke von 10 bis 60 µm und die äußere Schicht eine Dicke von 100 bis 400 µm besitzt.

7. Biologisch abbaubarer Verpackungswerkstoff nach den Ansprüchen 1, 3, 4 und 5, dadurch gekennzeichnet, daß die äußere Schicht der Verbundfolie als Schaumfolie ausgebildet ist.
